# EUROPÄISCHE PATENTANMELDUNG

(11) **EP 2 060 321 A2**
(43) Veröffentlichungstag der Anmeldung: **20.05.2009**
(21) Anmeldenummer: 08014600.4
(22) Anmeldetag: 18.08.2008
(51) Int. Cl.: B01J 8/38, B01J 8/24, B01J 8/44

(54) **Wirbelschichtprozessbehälter**

(30) Priorität: 14.11.2007 DE 202007015893 U; 23.11.2007 DE 202007016444 U
(71) Anmelder: L. B. Bohle Maschinen + Verfahren GmbH, 59320 Ennigerloh (DE)
(72) Erfinder: Bohle, Lorenz, 59320 Ennigerloh (DE)
(74) Vertreter: Habbel, Hans-Georg

(57) **Zusammenfassung**

Die Erfindung betrifft einen Wirbelschichtprozessbehälter mit einem Anströmboden, eine den Anströmboden durchdringende Luftströmung und Spraydüsen zur Zuführung von Reaktionsmittel in das Produktbett sowie eine kegelförmige Gestaltung des Anströmbodens und eine Rotationsluftführung unterhalb des Anströmbodens für die den Anströmboden durchdringende Prozessluft.

## Beschreibung

Die Erfindung bezieht sich auf einen Wirbelschichtprozessbehälter gemäß dem Oberbegriff des Anspruches 1 und des Anspruches 2.

Wird eine ruhende Schüttung aus Teilchen in einem Behälter von unten nach oben von einem Gas durchströmt, so geht die Schüttung von einer bestimmten Strömungsgeschwindigkeit an in die Wirbelschicht über. Bei Ausbildung der Wirbelschicht wird die Gewichtskraft der Feststoffteilchen durch die entgegengesetzt gerichtete Strömungskraft des Trägermediums aufgehoben. Der Feststoff verhält sich dann flüssigkeitsähnlich. In der Wirbelschicht findet ein sehr intensiver Stoff- und Wärmeaustausch statt.

Der Erfindung liegt die Aufgabe zugrunde, den Anströmboden so auszubilden, dass eine Ablagerung von Prozessprodukt nicht möglich ist und eine genügende Produktumwälzung in der Wirbelschicht stattfindet, sodass alle Produktpartikel gleichförmig mit dem eingedüsten Medium gehandelt werden.

Diese der Erfindung zugrundeliegende Aufgabe wird gelöst durch eine kegelförmige Gestaltung des Anströmbodens, wobei unterhalb dieses Anströmbodens die Anströmluft eine Rotationsbewegung ausführt, so dass zu der von unten nach oben gerichteten Kraft der Luft gleichzeitig eine Rotationskraft erzeugt wird.

Die Erfindung bezieht sich weiterhin darauf, dass in derartigen Wirbelschichtprozessbehältern Spraydüsen angeordnet sind und schlägt vor, dass diese Spraydüsen in der Wand des Wirbelschichtbehälters angeordnet sind und ihre Sprühkegel im wesentlichen tangential ausgerichtet sind. Im Gegensatz zu den axial ausgerichteten oder radial ausgerichteten Spraydüsen wird durch die tangential ausgerichteten Spraydüsen eine wesentlich bessere Besprühung des Produktes erreicht und gleichzeitig ist es möglich, diese Spraydüsen leicht auszuwechseln, ohne dass der kontinuierliche Prozess unterbrochen wird.

Ein Ausführungsbeispiel der Erfindung wird nachfolgend anhand der Zeichnung erläutert. Die Zeichnung zeigt dabei in
- Fig. 1: in einer Schnittdarstellung den Wirbelschichtprozessbehälter im Bereich des Anströmbodens und in
- Fig. 2: in einer Draufsicht die Anordnung und Wirkungsweise der Spraydüsen.

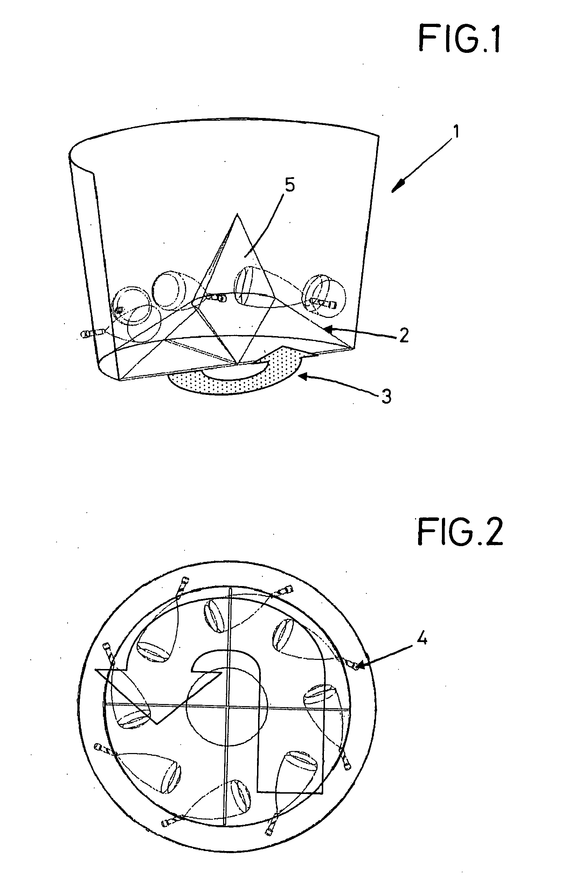

In der Zeichnung ist mit 1 ein Wirbelschichtprozessbehälter bezeichnet, der einen Anströmboden 2 besitzt, der - wie dies deutlich die Fig. 1 zeigt - kegelförmig ausgebildet ist. In der Mitte dieses Kegels ist zusätzlich noch einmal ein spitzer Kegel 5 vorgesehen, wobei durch diese Anordnung sichergestellt ist, dass ein Ablagern von Produkten auf dem Anströmboden vermieden wird. Das ggf. herabfallende Produkt wird durch den Kegel in den Luftstrom geführt und wieder mit nach oben gerissen. In Fig. 1 ist auch die Luftströmung 3 unterhalb des Anströmbodens 2 dargestellt und es ist insbesondere auch aus der Darstellung in Fig. 2 erkennbar, dass die Anströmluft in einer Rotation in den Wirbelschichtprozessbehälter 1 eingeführt wird.

Fig. 2 zeigt deutlich, dass die in der Wandung des Prozessbehälters angeordneten Spraydüsen 4 so ausgerichtet sind, dass sie im wesentlichen tangential in das Produktbett des Wirbelschichtprozessbehälters münden und dadurch einen Sprühkegel schaffen, der ebenfalls im wesentlichen tangential ausgerichtet ist.

## Patentansprüche

1. Wirbelschichtprozessbehälter (1) mit einem Anströmboden (2), eine den Anströmboden durchdringende Luftströmung (3) und Spraydüsen (4) zur Zuführung von Reaktionsmittel in das Produktbett, **gekennzeichnet durch** eine kegelförmige Gestaltung des Anströmbodens (2) und eine Rotationsluftführung unterhalb des Anströmbodens für die den Anströmboden durchdringende Prozessluft.

2. Wirbelschichtprozessbehälter (1) mit einem Anströmboden (2), eine den Anströmboden (2) durchdringende Luftströmung (3) und Spraydüsen (4) zur Zuführung von Reaktionsmittel in das Produktbett, **dadurch gekennzeichnet, dass** die Spraydüsen (4) in der Wand des Behälters (1) angeordnet sind und ihre Sprühkegel im wesentlichen tangential ausgerichtet sind.
